(19) Europäisches Patentamt
European Patent Office
Office européen des brevets

(11) Veröffentlichungsnummer: **0 128 341**
**A2**

(12) # EUROPÄISCHE PATENTANMELDUNG

(21) Anmeldenummer: **84105083.4**

(22) Anmeldetag: **05.05.84**

(51) Int. Cl.³: **C 01 B 25/00**, C 08 K 3/00

(30) Priorität: **17.05.83 DE 3317822**

(43) Veröffentlichungstag der Anmeldung: **19.12.84**
**Patentblatt 84/51**

(84) Benannte Vertragsstaaten: **DE FR GB IT**

(71) Anmelder: **BAYER AG, Konzernverwaltung RP**
**Patentabteilung, D-5090 Leverkusen 1 Bayerwerk (DE)**

(72) Erfinder: **Nielinger, Werner, Dr., Baerenstrasse 21,**
**D-4150 Krefeld (DE)**
Erfinder: **Hermann, Karl Heinz, Dr., Scheiblerstrasse 111,**
**D-4150 Krefeld (DE)**
Erfinder: **Dietrich, Michael, Dr., Deswatinesstrasse 57,**
**D-4150 Krefeld (DE)**

(54) **Stabilisierter, roter Phosphor und dessen Verwendung für flammfeste, thermoplastische Polyamid-Formmassen.**

(57) Mit Cadmiumsalzen von Carbonsäuren stabilisierter roter Phosphor, der sich als Flammschutzmittel für Polyamid-Formmassen eignet.

EP 0 128 341 A2

BAYER AKTIENGESELLSCHAFT 5090 Leverkusen, Bayerwerk

Konzernverwaltung RP
Patentabteilung Str/TH-c

# Stabilisierter, roter Phosphor und dessen Verwendung für flammfeste, thermoplastische Polyamid-Formmassen

Die vorliegende Erfindung betrifft flammfeste, thermoplastische Polyamid-Formmassen, die mit rotem Phosphor und Cadmiumsalzen von Carbonsäuren brandwidrig ausgerüstet sind.

Die Verwendung von rotem Phosphor als Brandschutzmittel für thermoplastische Polyamide ist bekannt. Unter ungünstigen Bedingungen, vor allem bei erhöhten Temperaturen, wie sie bei der Herstellung und der Verarbeitung der phosphorhaltigen Kunststoffe notwendig sein können oder in Gegenwart von Feuchtigkeit, neigt der rote Phosphor zur Zersetzung in Phosphorwasserstoff und Säuren des 1- bis 5-wertigen Phosphors. Daher hat man bereits versucht, die Freisetzung des toxischen Phosphorwasserstoffs zu verhindern. Gemäß DOS 2308104 gelingt dies durch Zusatz von Metalloxiden oder gemäß DOS 2703052 durch Zugabe von Magnesium- oder Aluminiumsalzen einer chelatbildenden Aminoessigsäure. Außerdem kann der Phosphor zur Stabilisierung mit Bindemitteln wie Wachsen

oder Metallseifen (DOS 2408488) oder Polymeren wie Phenol-Formaldehyd-Harzen (DAS 2625673, DOS 2734103) und Polyestern (DOS 2754515) umhüllt werden. Nach der Lehre der DAS 2745076 hat sich insbesondere Cadmiumoxid als Zusatz zu ummanteltem Phosphor bewährt. Dies führt, im Gegensatz zu den mit Kupferoxid stabilisierten Produkten zu Polyamiden mit verbesserter Lichtbogendurchschlagfestigkeit. Nach einem weiteren Vorschlag (DOS 2827760) können auch Aluminium-, Magnesium-, Zink-, Calcium-, Zinn-, Blei- oder Antimonsalze von Carboxylgruppen-haltigen Polymeren zur Stabilisierung verwendet werden. Die Herstellung dieser Produkte ist jedoch aufwendig und schwierig und die stabilisierende Wirkung dieser Systeme nicht immer befriedigend.

Es wurde nunmehr gefunden, daß man roten Phosphor mit Cadmiumsalzen von Carbonsäuren ausgezeichnet stabilisieren kann, so daß die genannten Nachteile nicht auftreten. So ist z.B. die Bildung von Phosphorwasserstoff sowohl während der Herstellung als auch während der Verarbeitung der stabilisierten Polyamide verschwindend gering.

Die erfindungsgemäße Verhinderung der Phosphorwasserstoffbildung ist überraschend, da Carbonsäuren allein die Abspaltung von Phosphorwasserstoff begünstigen. Außerdem ist die Wirkung der Cadmiumsalze von Carbonsäuren überraschend größer als die des Cadmiumoxids allein, da zu einer gleich guten Stabilisierung kleinere Mengen Cadmiumsalze notwendig sind als beim Einsatz von Cadmiumoxid.

Ein Gegenstand der Erfindung ist daher pulverförmiger, stabilisierter roter Phosphor, der mit Cadmiumsalzen von Carbonsäuren gegen thermooxidative Zersetzung stabilisiert ist und sich vorzugsweise als Flammschutzmittel für thermoplastische Polyamide eignet.

Eine ausreichende Stabilisierung wird mit 1 - 30 Gew.-%, vorzugsweise 3 - 25 Gew.-%, bezogen auf roten Phosphor, an Cadmiumsalzen erzielt.

Die Stabilisatoren können sowohl mit dem feinteiligen roten Phosphor mechanisch abgemischt werden, als auch bei ihrer Herstellung in Gegenwart einer Phosphoraufschlämmung auf die Phosphorteilchen ausgefällt werden. Es ist auch möglich, die Stabilisatoren während der Einarbeitung des Phosphors in den Kunststoff direkt in die Schmelze zu geben.

Der als Brandschutzmittel verwendete rote Phosphor sollte eine mittlere Teilchengröße $< 200$ µm, vorzugsweise $< 100$ µm aufweisen.

Ein weiterer Gegenstand der Erfindung sind daher auch thermoplastische Polyamidformmassen, die als Flammschutzmittel roten Phosphor und 0,01 - 5, vorzugsweise 0,05 - 3 Gew.-%, bezogen auf die Gesamtformmasse, eines Cadmiumsalzes wenigstens einer Carbonsäure als Stabilisator des Phosphors enthalten.

Als Stabilisatoren eignen sich vorzugsweise die Cadmiumsalze von aliphatischen, vorzugsweise mit $C_2$-$C_{20}$, besonders bevorzugt mit $C_3$-$C_{18}$, cycloaliphatischen, vorzugsweise mit $C_6$-$C_{20}$, besonders bevorzugt mit $C_7$-$C_{17}$, oder aromatischen, vorzugsweise mit $C_7$-$C_{20}$, besonders bevorzugt $C_7$-$C_{16}$, Carbonsäuren, vorzugsweise Dicarbonsäuren.

Beispielhaft seien die Cadmiumsalze der Oxalsäure, Malonsäure, Bernsteinsäure, Adipinsäure, Azelainsäure, Sebazinsäure, Phthalsäure, Benzoesäure, Essigsäure, Propionsäure, Stearinsäure genannt.

Bevorzugt werden die Salze der Dicarbonsäuren, insbesondere das Cadmium-oxalat und das Cadmium-adipat verwendet.
Die Herstellung der Salze erfolgt, indem man in Wasser oder einem geeigneten Lösungsmittel eine Cadmiumverbindung wie das Cadmiumacetat, -carbonat, -chlorid oder -sulfat mit den Mono- oder Dicarbonsäuren umsetzt.

Der rote Phosphor wird in Mengen von 1 - 16 Gew.-, bezogen auf die Gesamtformmasse, vorzugsweise von 2 - 12 Gew.-% zugesetzt.

Als Polyamide kommen insbesondere aliphatische Polyamide wie Polycaprolactam, Polyhexamethylenadipinsäureamid, Polyaminoundecanamid und Polylaurinlactam in Betracht, ferner Homo- und Copolyamide aus Dicarbonsäuren wie Adipinsäure, Azelainsäure, Sebazinsäure, Decandicarbonsäure, Terephthalsäure, Isophthalsäure und Diaminen wie Hexamethylendiamin, Trimethylhexamethylendiamin, Bis-(4-aminocyclohexyl)-methan, Bis-(4-aminocyclohexyl)-propan-2,2 sowie Copolymerisate dieser Monomeren mit Lactamen. Polyamid-6 und/oder Polyamid-6,6 wird bevorzugt flammfest ausgerüstet.

Die Herstellung der erfindungsgemäßen thermoplastischen Polyamid-Formmassen erfolgt durch Mischen der Komponenten in handelsüblichen Extrudern oder Knetern. Dabei kann das wie oben beschriebene stabilisierte Flammschutzmittel direkt in den Thermoplasten oder in Form eines Konzentrates in Thermoplasten in diesen eingearbeitet werden. Es ist auch möglich, den roten Phosphor und den Stabilisator separat zu einem Thermoplastenkonzentrat zu verarbeiten oder die beiden Komponenten direkt separat in den Thermoplasten einzugeben.

Der Phosphor kann außerdem mit anderen Metallverbindungen vorstabilisiert sein, wie z.B. 0,3 - 3 % Magnesiumoxid, Aluminiumoxid, Bleioxid, Zinkoxid und Phlegmatisierungsmittel enthalten wie z.B. 0,05 - 1 % Paraffinöl oder hochsiedende Ester.

Die stabilisierten, brandwidrig ausgerüsteten Polyamide können die üblichen Zusätze und Hilfsmittel enthalten, beispielsweise einen oder mehrere Füllstoffe, insbesondere Glasfasern in Mengen von 10 - 60 Gew.-%, bezogen auf die gesamte Mischung. Als weitere Füll- und Verstärkungsstoffe kommen Mikroglaskugeln, Kreide, Quarze wie beispielsweise Novaculit und Silikate wie Asbest, Feldspat, Glimmer, Talkum, Wollastonit sowie Kaolin in kalzinierter und nicht kalzinierter Form in Betracht. Außerdem sind Farbstoffe und Pigmente insbesondere Farbruße und/oder Nigrosinbasen, Stabilisatoren, Verarbeitungshilfsmittel und Staub bindende Mittel zu nennen, ferner Schlagzähmodifikatoren, beispielsweise auf der Basis von Copolymerisaten des Ethylens, Poly(meth)-acrylaten und gepfropften Polybutadienen.

Die thermoplastischen Formmassen werden nach den bekannten Methoden durch Spritzguß oder Extrusion verarbeitet. Polyamid-Formkörper sind besonders für den Einsatz auf dem Elektrosektor und Automobilsektor geeignet und finden beispielsweise zur Herstellung von Gehäusen und Abdeckungen für den technischen Bereich, insbesondere für den Elektrosektor sowie von Teilen für Elektrohaushaltsgeräte und Automobile Verwendung.

Beispiele 1 - 17

Man erhitzt eine Mischung aus Polyamid-66 mit einer relativen Viskosität von 2,9, gemessen an einer 1-%igen Lösung in m-Kresol bei 25°C, 10 % rotem Phosphor (als 20-%iges Konzentrat in Polyamid-66) und dem Stabilisator unter Rühren in einer Stickstoffatmosphäre 30 min auf 280°C (Badtemperatur). Das Ausgangsgemisch hat bei allen Versuchen einen Feuchtigkeitsgehalt von 0,2 %.

Der während der Reaktion entstehende Phosphorwasserstoff wird mit einem Stickstoffstrom in eine 2-%ige wäßrige Quecksilber-2-chlorid-Lösung geleitet und über den gemäß der Gleichung

$$PH_3 + 3\ Hg\ Cl_2 = P\ (Hg\ Cl)_3 + 3\ H\ Cl$$

gebildeten Chlorwasserstoff acidimetrisch bestimmt.

Um die in Wasser löslichen Säuren zu ermitteln, extrahiert man 35 g des auf 280°C erhitzten Polyamids 16 Stunden mit Wasser von 95°C. Der gesamte Extrakt wird auf 200 ml aufgefüllt. An dieser Lösung werden pH-Wert und Phosphorgehalt gemessen.

In Tabelle 1 sind in Abhängigkeit vom Stabilisatorgehalt der entstandene Phosphorwasserstoff sowie pH-Wert und Gehalt an Phosphor des Extraktes angegeben.

Die Menge des Phosphorwasserstoffs bezieht sich auf 50 g phosphorhaltiges Polyamid, die Menge des Phosphors im Extrakt auf 35 g Polyamid.

Tabelle 1

| Beispiel | Stabilisator | Menge (Gew.-%) | ber. als CdO (Gew.-%) | $PH_3$ (mg) | Extrakt pH-Wert | Extrakt Phosphor (mg) |
|---|---|---|---|---|---|---|
| | Cadmium-adipat | | | | | |
| 1 | | 4 | 2 | 0,4 | 5,2 | 0,2 |
| 2 | | 2 | 1 | 1,1 | 5,1 | 0,4 |
| 3 | | 1 | 0,5 | 1,5 | 5,1 | 0,4 |
| 4 | | 0,5 | 0,25 | 1,6 | 5,0 | 0,6 |
| | Cadmium-oxalat | | | | | |
| 5 | | 3,13 | 2 | 1,6 | 4,6 | 3,1 |
| 6 | | 1,58 | 1 | 1,0 | 4,3 | 1,3 |
| 7 | | 0,78 | 0,5 | 1,2 | 4,0 | 1,3 |
| | Cadmium-phthalat | | | | | |
| 8 | | 2,1 | 1 | 1,2 | 5,2 | 0,3 |
| | Cadmium-stearat | | | | | |
| 9 | | 5,3 | 1 | 0,3 | 5,1 | 0,9 |

Beispiel 1 (Fortsetzung)

| Beispiel | Stabilisator | Menge (Gew.-%) | ber. als CdO (Gew.-%) | $PH_3$ (mg) | Extrakt pH-Wert | Extrakt Phosphor (mg) |
|---|---|---|---|---|---|---|
| | Cadmium-oxid | | | | | |
| 10* | | 2 | 2 | nicht nachweisb. | 6,3 | 0,8 |
| 11* | | 1 | 1 | " | 5,9 | 2,0 |
| 12* | | 0,5 | 0,5 | 1 | 3,9 | 6,3 |
| 13* | | - | - | 4,8 | 3,1 | 12,9 |
| | Kupfer-2-oxid | | | | | |
| 14* | | 1 | | nicht nachweisb. | 2,7 | 26 |
| 15* | Cadmiumoxid<br>Adipinsäure | 2<br>2 | | 2,3 | 5,0 | 0,6 |
| 16* | Cadmiumoxid<br>Adipinsäure | 1<br>1 | | 2,2 | 4,8 | 1,0 |
| 17* | Cadmiumoxid<br>Adipinsäure | 0,5<br>0,5 | | 2,6 | 4,4 | 2,3 |

* Vergleichsbeispiel

Die Vergleichsbeispiele 10 - 17 zeigen die Überlegenheit der erfindungsgemäßen Stabilisatoren hinsichtlich der Bildung der Säuren gegenüber Cadmiumoxid, Kupferoxid und auch gegenüber einer Mischung aus Cadmiumoxid und Adipinsäure.

Beispiele 18 - 21

Auf einem Doppelwellenextruder vom Typ ZSK 83 der Firma Werner und Pfleiderer werden bei einer Massetemperatur von 280°C und einem Durchsatz von 50 kg/h aus einer Mischung von 50 Teilen Polyamid-66 mit einer relativen Viskosität von 2,9, 25 Teilen 20-%iges Phosphorkonzentrat in Polyamid-66 und 25 Teilen Glasfasern unter Zusatz verschiedener Stabilisatoren Polyamidformmassen hergestellt, die, wie in den Beispielen 1 - 17 beschrieben, mit Wasser extrahiert werden. pH-Werte und Phosphorgehalte der Extrakte zeigt Tabelle 2.

Tabelle 2

| Beispiel | Stabilisator | Menge Gew.-% | ber. als CdO Gew.-% | Extrakt pH-Wert | Extrakt Phosphor (mg) |
|---|---|---|---|---|---|
| 18 | Cadmiumadipat | 1 | 0,5 | 5,1 | 0,2 |
| 19 | Cadmium oxalat | 1 | 0,5 | 8,0 | 0,6 |
| 20* | Cadmiumoxid | 1 | 1 | 8,8 | < 0,2 |
| 21* | Kupfer oxid | 1 | | 3,3 | 14,5 |

Ein Vergleich der Beispiele 18 und 19 mit Beispiel 20 lehrt, daß zur Erzielung eines vergleichbaren Effektes eine geringere Menge Cadmium ausreicht, wenn dieses als Salz eingesetzt wird.

Patentansprüche

1. Pulverförmiger, roter Phosphor, der mit Cadmiumsalzen von Carbonsäuren gegen thermooxidative Zersetzung stabilisiert ist.

2. Roter Phosphor nach Anspruch 1, dadurch gekennzeichnet, daß er mit 1-30 Gew.-% wenigstens eines Cadmiumsalzes stabilisiert ist.

3. Roter Phosphor nach Anspruch 2, dadurch gekennzeichnet, daß er mit 3-15 Gew.-% wenigstens eines Cadmiumsalzes stabilisiert ist.

4. Roter Phosphor nach Ansprüchen 1-3, dadurch gekennzeichnet, daß er mit Cadmiumsalzen von aliphatischen mit $C_2$-$C_{20}$, cycloaliphatischen mit $C_6$-$C_{20}$ oder aromatischen Carbonsäuren mit $C_7$-$C_{20}$ stabilisiert ist.

5. Roter Phosphor nach Ansprüchen 1-4, dadurch gekennzeichnet, daß das Cadmiumsalz einer Dicarbonsäure verwendet wird.

6. Roter Phosphor nach Ansprüchen 1-5, dadurch gekennzeichnet, daß Cadmiumoxalat oder Cadmiumadipat verwendet wird.

7. Flammschutzmittel für Polyamide enthaltend stabilisierten roten Phosphor nach Ansprüchen 1-6.

8. Thermoplastische Polyamidformmassen, die als Flammschutzmittel stabilisierten roten Phorphor nach Anspruch 1 enthalten.

9. Polyamidformmassen nach Anspruch 8, dadurch gekennzeichnet, daß sie roten Phosphor und 0,01-5 Gew.-%, bezogen auf die Gesamtformmasse, eines Cadmiumsalzes wenigstens einer Carbonsäure enthalten.

10. Polyamidformmassen nach Anspruch 9, dadurch gekennzeichnet, daß sie 0,05-3 Gew.-% eines Cadmiumsalzes enthalten.